# EUROPEAN PATENT SPECIFICATION

(11) **EP 3 952 036 B1**
(45) Date of publication and mention of the grant of the patent: **13.03.2024**
(21) Application number: 20782588.6
(22) Date of filing: 27.03.2020
(51) Int. Cl.: H01S 3/067, G02B 6/036, H01S 3/08, H01S 3/08045, H01S 3/094, H01S 3/0941, H01S 3/16, H01S 3/17

(54) **ACTIVE ELEMENT ADDED-OPTICAL FIBER, RESONATOR, AND FIBER LASER DEVICE**
OPTISCHE FASER MIT AKTIVEM ELEMENT, RESONATOR UND FASERLASERVORRICHTUNG
FIBRE OPTIQUE À ÉLÉMENT ACTIF, RÉSONATEUR ET DISPOSITIF LASER À FIBRE

(30) Priority: 29.03.2019 JP 2019065620; 25.09.2019 JP 2019174772
(43) Date of publication of application: 09.02.2022
(73) Proprietor: Fujikura Ltd., Tokyo 135-8512 (JP)
(72) Inventor: NISHIMURA, Ryoichi, Sakura-shi, Chiba 285-8550 (JP); KITAHARA Rintaro, Sakura-shi, Chiba 285-8550 (JP)
(74) Representative: Plasseraud IP
(86) International application number: PCT/JP2020/014389
(87) International publication number: WO 2020/203930

(56) References cited:
- WO-A1-2014/142010
- JP-A- H03 127 032
- JP-A- H03 127 032
- JP-A- 2006 058 912
- JP-A- 2012 162 433
- JP-A- 2014 122 159
- JP-A- 2018 060 935
- US-A- 5 799 125
- US-A1- 2008 025 363
- US-A1- 2014 036 348

## Description

### Technical Field

The present invention relates to an active element-added optical fiber, a resonator, and a fiber laser device capable of suppressing deterioration of beam quality.

### Background Art

A fiber laser device, which is excellent in light condensing property, has high power density, and can obtain light that becomes a small beam spot, is used in various fields such as a laser processing field and a medical field. In such a fiber laser device, output of emitted light is increased. However, when the power density of light in an optical fiber increases, wavelength conversion of light due to stimulated Raman scattering is likely to occur, and light having an unintended wavelength can be emitted. In this case, the light reflected by a workpiece or the like returns to the fiber laser device and is amplified, and the amplification of the light having the wavelength to be amplified in design becomes unstable, and the output can become unstable.

Means for suppressing stimulated Raman scattering in the optical fiber include increasing the effective cross-sectional area of light propagating through the core. One method for increasing the effective cross-sectional area is to increase the diameter of the core. Therefore, in order to suppress stimulated Raman scattering in the optical fiber, for example, an optical fiber having a core that enables propagation of light in a few mode is used.

In the fiber laser device, it is preferable that the beam quality of emitted light is excellent from the viewpoint of light condensing property or the like. Therefore, there is a demand for suppressing excitation of light in modes other than the basic mode even when the effective cross-sectional area of light is increased by using an optical fiber having a core that enables propagation of light in the few mode as described above. Note that the beam quality is indicated, for example, by M² (M square) or the like. Therefore, amplification of light in a higher mode is suppressed while using an active element-added optical fiber having a core that enables propagation of light in the few mode as in an active element-added optical fiber described in Patent Literature 1 below.

Other examples of background art can be found in Patent Literature 2-5.

[Patent Literature 1] JP 5124701 B1
[Patent Literature 2] US2008/025363A1
[Patent Literature 3] JP H03 127 032 A
[Patent Literature 4] US5799125A
[Patent Literature 5] JP2006058912A

### Summary of Invention

However, there is a demand for an active element-added optical fiber capable of further suppressing deterioration of beam quality. Therefore, an object of the present invention is to provide an active element-added optical fiber, a resonator, and a fiber laser device capable of suppressing deterioration of beam quality.

The object of the present invention is solved by an optical fiber as defined in the independent claim. Preferred embodiments are defined in the dependent claims.

In order to achieve the above object, the present invention is an active element-added optical fiber including a core, in which the core includes a first region and a second region, the first region is a region from a central axis to a radius ra, and an active element pumped by pumping light is added to the first region, the second region is a region that surrounds the first region with no gap and extends to an outer peripheral surface of the core, and the active element is not added to the second region, when a radius of the core is d, O.ld < ra < d, when a distance from a central axis in a radial direction of the core is r, in a region of 0.2d < r ≤ 0.9d, at least one maximum value position where a refractive index is maximum at a refractive index higher than an average value of a refractive index in a region of 0 ≤ r ≤ 0.9d exists.

The inventor has found the following regarding the active element-added optical fiber. That is, by adding the active element to the first region in the above range and not adding the active element to the second region in the above range, while LP01 mode light propagating through the core is amplified, the amplification of light in a higher mode can be suppressed. On the other hand, in the region of 0.2d < r ≤ 0.9d, when at least one maximum value position where the refractive index becomes the maximum at a refractive index higher than the average value of the refractive index in the region of 0 ≤ r ≤ 0.9d exists, it is possible to suppress the LP01 mode light from being excessively concentrated in the vicinity of the central axis and to increase the effective cross-sectional area of the LP01 mode light. Therefore, occurrence of stimulated Raman scattering can be suppressed. Therefore, with the active element-added optical fiber of the present invention, deterioration of beam quality can be suppressed.

Further, the average value of the concentration of the active element in the region of 0 ≤ r ≤ O.ld is preferably higher than the average value of the concentration of the active element in the region of O.ld < r ≤ ra.

In this case, the LP01 mode light propagating through the core can be further amplified.

In accordance with claim 1, the average value of the refractive index in the region of O.ld ≤ r ≤ 0.8ra is higher than the average value of the refractive index in the region of 1.1ra ≤ r ≤ 0.9d.

In this case, by increasing the maximum value of the refractive index in the range of 0.2d < r < 0.9d, the effective cross-sectional area of light propagating through the core can be further increased.

In one example, the average value of the refractive index in the region of O.ld ≤ r ≤ 0.8ra may be lower than the average value of the refractive index in the region of 1.1ra ≤ r ≤ 0.9d.

In this case, by increasing the maximum value of the refractive index in the range of r < 0.1d, the effective cross-sectional area of light propagating through the core can be reduced.

Further, ra ≤ 0.75d is more preferable.

In this case, as compared with the case of ra > 0.75d, the amplification of the light in a higher mode propagating through the core can be remarkably suppressed, and the deterioration of the beam quality can be more remarkably suppressed.

Further, ra ≤ 0.7d is more preferable.

In this case, as compared with the case of 0.7d < ra ≤ 0.75d, the amplification of the light in a higher mode propagating through the core can be remarkably suppressed, and the deterioration of the beam quality can be more remarkably suppressed.

Further, ra < 0.7d is more preferable.

In this case, as compared with the case of ra ≥ 0.7d, the amplification of the light in a higher mode propagating through the core can be remarkably suppressed, and the deterioration of the beam quality can be more remarkably suppressed.

Further, 0.4d < ra is preferable.

In this case, the efficiency of amplification of light can be further increased as compared with the case of ra ≤ 0.4d.

Moreover, 0.5d < ra is more preferable.

In this case, the efficiency of amplification of light can be further increased. Further, the basic mode can be efficiently amplified while the amplification of the higher mode is suppressed.

Further, the average value of the refractive index in the region of 0 ≤ r ≤ 0.1d is preferably higher than the refractive index in the region of r = 0.2d.

In this case, the efficiency of amplification of the LP01 mode light can be further increased.

Further, the active element may include ytterbium.

Further, when the active element is ytterbium, it is preferable that at least one maximum value position exists in the region of 0.338d < r ≤ 0.614d.

In this case, it is possible to efficiently amplify the LP01 mode light by further suppressing the LP01 mode light from being excessively concentrated on the center of the core and suppressing the amount of protrusion of the LP01 mode light from the first region. Further, the maximum value position existing in such a range makes it possible to effectively widen the effective cross-sectional area of the LP01 mode light in the active element-added optical fiber, suppress the occurrence of stimulated Raman scattering, and suppress deterioration of beam quality.

Further, when the active element is ytterbium, 0.595d ≤ ra ≤ 0.716d is preferable.

By setting the first region of the core within such a range, it is possible to effectively widen the effective cross-sectional area of the LP01 mode light in the active element-added optical fiber, suppress the occurrence of stimulated Raman scattering, and suppress deterioration of beam quality.

Further, the standard deviation of the relative refractive index difference of the region of 1.1ra < r ≤ 0.9d is preferably 0.004 or less.

The refractive index on the outer peripheral side of the core easily influences the distribution of the power of the light propagating through the core. Therefore, with such a configuration, it is possible to suppress unintentional disturbance of the power of the light. Therefore, a reduction in beam quality can be further suppressed.

In this case, at least the region of 1.1ra < r ≤ 0.9d is preferably made of quartz to which only germanium is added.

When the region of 1.1ra < r ≤ d is made of quartz to which only germanium is added, the standard deviation of the relative refractive index difference of the region of 1.1ra < r ≤ 0.9d can be easily set to 0.01 or less.

Further, the maximum value position may be located in the first region, an up-dopant that increases the refractive index of the core may be further added to at least a part of the first region, and the concentration of the up-dopant may be maximum at the maximum value position.

With such a configuration, the maximum value position can be formed in the first region.

Further, the maximum value position may be located in the first region, a down-dopant that reduces the refractive index of the core may be further added to at least a part of the first region, and the concentration of the down-dopant may be minimum at the maximum value position.

With such a configuration, the maximum value position can be formed in the first region.

Alternatively, the maximum value position may be located in the first region, an up-dopant that increases the refractive index of the core and a down-dopant that reduces the refractive index of the core may be further added to at least a part of the first region, and a concentration difference between the up-dopant and the down-dopant may be maximum at the maximum value position.

With such a configuration, the maximum value position can be formed in the first region.

Further, the active element-added optical fiber may further include: a cladding that surrounds an outer peripheral surface of the core with no gap, in which an average value of a relative refractive index difference with respect to the cladding in a region of 0 ≤ r ≤ 0.1d in the core is equal to or less than a value of a relative refractive index difference at the maximum value position, an average value of a relative refractive index difference of the core with respect to the cladding is 0.10% or more, and the maximum value position may be 0.45d or more.

Note that a plurality of maximum value positions may exist. Here, "equal to or less than a value of a relative refractive index difference at the maximum value position" when a plurality of maximum value positions exists means equal to or less than the value of the relative refractive index difference at the maximum value position corresponding to the value of the largest relative refractive index difference among the plurality of maximum value positions. Further, when the optical fiber includes an inner cladding surrounding the core without a gap and an outer cladding surrounding the inner cladding without a gap, the inner cladding may be simply referred to as a cladding.

By forming the active element-added optical fiber in this manner, for example, the effective cross-sectional area can be increased.

Alternatively, the active element-added optical fiber may further include: a cladding that surrounds an outer peripheral surface of the core with no gap, in which an average value of a relative refractive index difference with respect to the cladding in a region of 0.055d ≤ r ≤ O.ld in the core is equal to or more than a value of a relative refractive index difference at the maximum value position, an average value of a relative refractive index difference of the core with respect to the cladding is larger than 0% and 0.18% or less, and the maximum value position may be 0.55d or less.

Note that, also in this case, a plurality of maximum value positions may exist. Here, "equal to or more than a value of a relative refractive index difference at the maximum value position" when a plurality of maximum value positions exists means equal to or more than the value of the relative refractive index difference at the maximum value position corresponding to the value of the largest relative refractive index difference among the plurality of maximum value positions.

By forming the active element-added optical fiber in this manner, for example, the effective cross-sectional area can be increased.

Further, the core may have a refractive index profile in which the refractive index gradually decreases from the maximum value position toward at least an inner side of the core.

In such a refractive index profile, for example, as compared with a rectangular refractive index profile or a refractive index profile in which the refractive index protrudes in a shape in which the maximum value position and the vicinity thereof are convex upward with respect to the rectangular refractive index profile, the vicinity of the end portion in the refractive index profile in the vicinity of the maximum value position is more likely to be away from the central axis of the core. As described above, the vicinity of the end portion of the refractive index profile in the vicinity of the maximum value position is away from the central axis of the core, so that the LP01 mode light can be further suppressed from being excessively concentrated in the vicinity of the central axis of the core, and the effective cross-sectional area of the LP01 mode light can be further increased. Therefore, the occurrence of stimulated Raman scattering can be suppressed, deterioration of beam quality can be suppressed, and light can be amplified.

Further, in order to achieve the above object, a resonator of the present invention includes: any of the active element-added optical fibers described above; a first mirror that is optically coupled to the core of the active element-added optical fiber on one side of the active element-added optical fiber and reflects light having at least a part of wavelength of light emitted by the pumped active element; and a second mirror that is optically coupled to the core of the active element-added optical fiber on the other side of the active element-added optical fiber and reflects light having at least a part of wavelength of the light reflected by the first mirror at a reflectance lower than that of the first mirror.

With this resonator, amplification of light in a higher mode is suppressed while amplifying the LP01 mode light in light traveling between the first mirror and the second mirror. Therefore, light in which deterioration of beam quality is suppressed can be emitted.

Further, in order to achieve the above object, a fiber laser device according to the present invention includes any one of the active element-added optical fibers described above and a light source that emits light for pumping the active element.

As described above, in this active element-added optical fiber, deterioration of beam quality is suppressed and light can be amplified, and thus, with this fiber laser device, light in which deterioration of beam quality is suppressed can be emitted.

As described above, according to the present invention, there are provided an active element-added optical fiber, a resonator, and a fiber laser device capable of suppressing deterioration of beam quality.

### Brief Description of Drawings

FIG. 1 is a diagram illustrating a fiber laser device according to an embodiment of the present invention.
FIG. 2 is a diagram illustrating a state of a cross section perpendicular to a longitudinal direction of an active element-added optical fiber.
FIG. 3 is a diagram illustrating concentration distribution of an active element added to a core of an active element-added optical fiber.
FIG. 4 is a diagram illustrating a state of a refractive index profile of a core of an active element-added optical fiber.
FIG. 5 is a diagram illustrating a relationship between a ratio of a radius of a core to a radius of a first region and beam quality of light emitted from an active element-added optical fiber.
FIG. 6 is a diagram illustrating a relationship between a ratio of a radius of a core to a radius of a first region and conversion efficiency at which pumping light incident on an active element-added optical fiber is converted into light emitted from the active element-added optical fiber.
FIG. 7 is a diagram illustrating a variation of a fiber laser device.
FIG. 8 is a diagram illustrating a relationship between a diameter of a cladding and a breakage probability.
FIG. 9 is a diagram illustrating concentration distribution of aluminum added to the first region of the core.
FIG. 10 is a diagram illustrating concentration distribution of phosphorus added to the first region of the core.
FIG. 11 is a diagram illustrating an example of concentration difference distribution of aluminum and phosphorus added to the first region of the core.
FIG. 12 is a diagram illustrating another example of concentration difference distribution of aluminum and phosphorus added to the first region of the core.
FIG. 13 is a diagram illustrating an example of an aluminum concentration distribution in a case where aluminum is added to the first region of the core and phosphorus is not added.
FIG. 14 is a diagram illustrating an example of a phosphorus concentration distribution in a case where phosphorus is added to the first region of the core and aluminum is not added.
FIG. 15 is a diagram illustrating an example of concentration distribution in a case where boron is added to the first region of the core.
FIG. 16 is a diagram illustrating an example of a refractive index profile of a core of an active element-added optical fiber of a comparative example.
FIG. 17 is a diagram illustrating an example of a relationship between a difference between an effective cross-sectional area of an active element-added optical fiber of the present invention and an effective cross-sectional area of a step-type optical fiber and a maximum value position in a core of the active element-added optical fiber of the present invention.
FIG. 18 is a diagram illustrating another example of a relationship between a difference between an effective cross-sectional area of an active element-added optical fiber of the present invention and an effective cross-sectional area of a step-type optical fiber and a maximum value position in a core of the active element-added optical fiber of the present invention.

### Description of Embodiments

Preferred embodiments of an optical fiber and a laser device according to the present invention will be described below in detail with reference to the drawings. The embodiments illustrated below are for facilitating the understanding of the present invention, and are not for limiting the interpretation of the present invention. Note that, for easy understanding, scales in the drawings can be different from scales described in the description below. Further, in the following, a portion described using a refractive index may be described using a relative refractive index difference, and a portion described using a relative refractive index difference may be described using a refractive index difference.

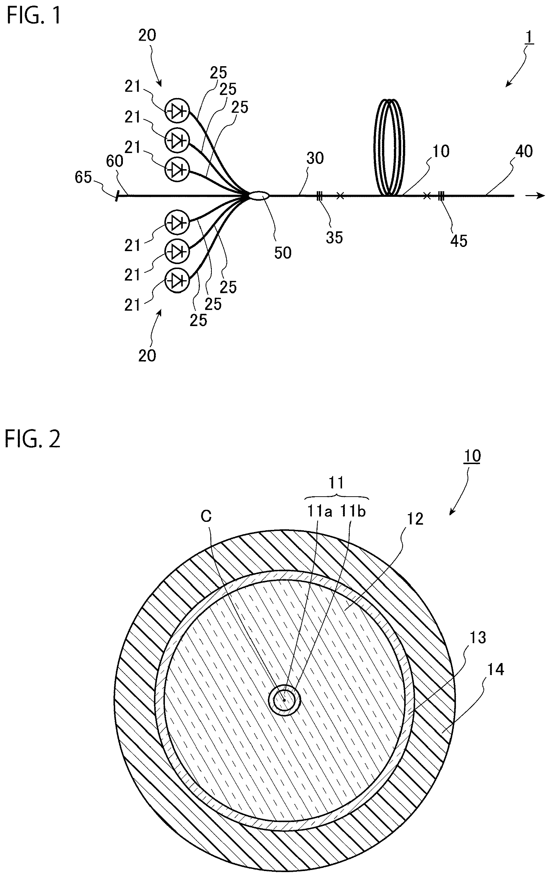

FIG. 1 is a diagram illustrating a laser device according to the present embodiment. As illustrated in FIG. 1, a fiber laser device 1 according to the present embodiment is a resonator-type fiber laser device, and mainly includes an active element-added optical fiber 10, a pumping light source 20, a first optical fiber 30, a first FBG 35 provided in the first optical fiber 30, a second optical fiber 40, a second FBG 45 provided in the second optical fiber 40, an optical combiner 50, and a third optical fiber 60.

### <Configuration of the active element-added optical fiber>

FIG. 2 is a cross-sectional view illustrating a state of a cross-section of the active element-added optical fiber 10 illustrated in FIG. 1. As illustrated in FIG. 2, the active element-added optical fiber 10 mainly includes a core 11, an inner cladding 12 surrounding the outer peripheral surface of the core 11 without a gap, an outer cladding 13 covering the outer peripheral surface of the inner cladding 12, and a cover layer 14 covering the outer cladding 13. The refractive index of the inner cladding 12 is lower than the refractive index of the core 11, and the refractive index of the outer cladding 13 is lower than the refractive index of the inner cladding 12. That is, the active element-added optical fiber 10 is a so-called double-clad optical fiber.

The core 11 has a first region 11a and a second region 11b. Description will be given below assuming that the radius of the core 11 is d and the distance from a central axis C in the radial direction of the core 11 is r. The first region 11a is a region from the central axis C to a radius ra. That is, the first region 11a is a region of 0 ≤ r ≤ ra. However, the radius ra of the first region 11a is larger than 10% and 75% or less of the radius d of the core 11. That is, O.ld < ra ≤ 0.75d. Further, the second region 11b is a region that surrounds the first region 11a and is from the outer peripheral surface of the first region 11a to the outer peripheral surface of the core 11. That is, the second region 11b is a region that surrounds the first region 11a without a gap and is of ra < r ≤ d.

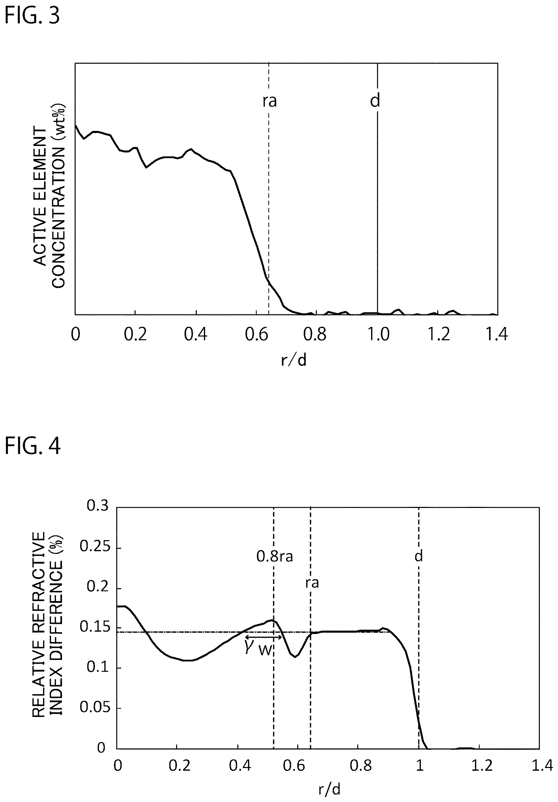

An active element to be pumped by pumping light emitted from the pumping light source 20 is added to the core 11 in part. FIG. 3 is a diagram illustrating concentration distribution of an active element added to the core 11 of the active element-added optical fiber 10. As illustrated in FIG. 3, the first region 11a is made of quartz glass to which the active element is added throughout, and the second region 11b is made of quartz glass to which the active element is not added. Therefore, when the active element is added to a predetermined region in the radial direction, the first region 11a is the predetermined region and the radius of this predetermined region is ra in the present embodiment.

Note that the region to which the active element is added means a region to which 0.5 wt% or more of the active element is added, and a region in which the active element is detected at a concentration lower than 0.5 wt% due to diffusion of the active element or the like at the time of manufacturing the active element-added optical fiber cannot be said to be a region to which the active element is added, but is a region to which the active element is not added. Therefore, even when the active element is added throughout the first region 11a in an amount of 0.5 wt% or more and the active element is detected from the second region 11b, that is noise, manufacturing error, and the like, and the detection amount is lower than 0.5 wt%.

The concentration of the active element in the vicinity of the center of the first region 11a is made higher than the average concentration of the active element in the region to which the active element is added around the vicinity of the center. As illustrated in FIG. 3, the vicinity of the center is a region of 10% of the radius of the core. That is, the average value of the concentration of the active element in the region of 0 ≤ r ≤ 0.1d is higher than the average value of the concentration of the active element in the region of O.ld < r ≤ ra.

In the present embodiment, the active element added to the first region 11a is ytterbium (Yb), and aluminum and phosphorus are further added to the first region 11a in order to enhance resistance to photodarkening. Further, for example, a dopant such as germanium (Ge) that increases the refractive index is added to the second region 11b. FIG. 4 is a diagram illustrating a state of the refractive index profile of the core 11 of the active element-added optical fiber 10. With such an additive and its concentration distribution, the first region 11a and the second region 11b have a refractive index profile illustrated in FIG. 4.

Note that in order to adjust the refractive index, a dopant such as fluorine (F) or boron (B) may be added at least in part. Further, although different from the present embodiment, the active element added to the first region 11a may be an active element other than ytterbium. Examples of such active element include thulium (Tm), cerium (Ce), neodymium (Nd), europium (Eu), erbium (Er) and the like in addition to ytterbium as a rare earth element, and further include bismuth (Bi) and the like in addition to a rare earth element as an active element.

As illustrated in FIG. 4, the core 11 is a region from the central axis C to the inner cladding 12 where the relative refractive index difference is 0.05%, and is an inner side of a portion where the relative refractive index difference is 0.05% with respect to the inner cladding 12. In FIG. 4, the position where the relative refractive index difference is 0.05%, that is, the position of the outer peripheral surface of the core 11 is indicated by the broken lines. Note that the reason why the region of the core 11 is defined in this way is that even when the shape of the region having a relative refractive index difference of less than 0.05% is slightly changed, there is little influence on the optical characteristics of the active element-added optical fiber 10. Note that the relative refractive index difference of the core refers to a relative refractive index difference of the core with respect to a region of the cladding adjacent to the core.

In the present embodiment, in the second region 11b, the refractive index increases from the boundary with the first region 11a to the vicinity of the inner periphery, the relative refractive index difference is substantially constant in the region from the vicinity of the inner periphery to the vicinity of the outer periphery, and the relative refractive index difference decreases toward the inner cladding 12 in the region in the vicinity of the outer periphery. In the present embodiment, the standard deviation of the relative refractive index difference of the region of 1.1ra < r ≤ 0.9d is 0.01 or less, and only germanium is added to at least the region of 1.1ra < r ≤ d in the second region 11b to adjust the refractive index.

In the present embodiment, the average value of the refractive index in the region of 0 ≤ r ≤ 0.1d is higher than the average value of the refractive index in the region of O.ld < r ≤ ra. Further, the average value of the refractive index in the region of 0 ≤ r ≤ 0.1d is higher than the refractive index in the region of r = 0.2d.

Further, in the region of 0.2d < r ≤ 0.9d, at least one maximum value position where the refractive index is maximum at a refractive index higher than the average value of the refractive index in the region of 0 ≤ r ≤ 0.9d exists. More specifically, the maximum value position refers to the position of the maximum value of the refractive index in a region where a length γw in the radial direction of the region having a refractive index higher than an average value γ of the refractive index in the region of 0 ≤ r ≤ 0.9d is 1/10 or more of the wavelength of light propagating through the active element-added optical fiber 10. As illustrated in FIG. 4, in the present embodiment, two maximum value positions exist, and further two positions where the refractive index is minimum exist. Each maximum value position exists in the first region 11a, and such a maximum value position does not exist in the second region 11b. One maximum value position exists on the central axis, and the other maximum value position exists in the region of 0.4d < r ≤ ra. In the example illustrated in FIG. 4, the other maximum value position exists at a position where r = 0.5d substantially. In the present embodiment, the refractive index profile in the vicinity of the other maximum value position is a refractive index profile in which the refractive index gradually decreases from the maximum value position toward at least an inner side of the core. The refractive index profile has one singular point where the monotonous decrease of the refractive index ends from the maximum value position toward the central axis side of the core 11, and the one singular point exists between the central axis of the core 11 and the maximum value position. Note that this refractive index profile has the other singular point at which the monotonous decrease of the refractive index ends from the maximum value position toward the cladding side. Further, the refractive index at these maximum value positions is higher than the refractive index in the region of 1.1ra < r ≤ 0.9d where the standard deviation is 0.01 or less.

The active element-added optical fiber 10 is a few mode fiber, and in a case where at least light having a wavelength of 1070 nm propagates through the core 11, as the light, at least LP11 mode light can propagate in addition to light in the LP01 mode, which is the basic mode. Therefore, the effective cross-sectional area of light can be increased as compared with a case where the active element-added optical fiber 10 is a single mode fiber. Note that, in the active element-added optical fiber 10 of the present embodiment, even in a case where light having a wavelength of 1030 nm to 1090 nm propagates, at least the LP11 mode light can propagate in addition to the light in the LP01 mode, which is the basic mode.

Here, the radius ra of the first region 11a will be described.

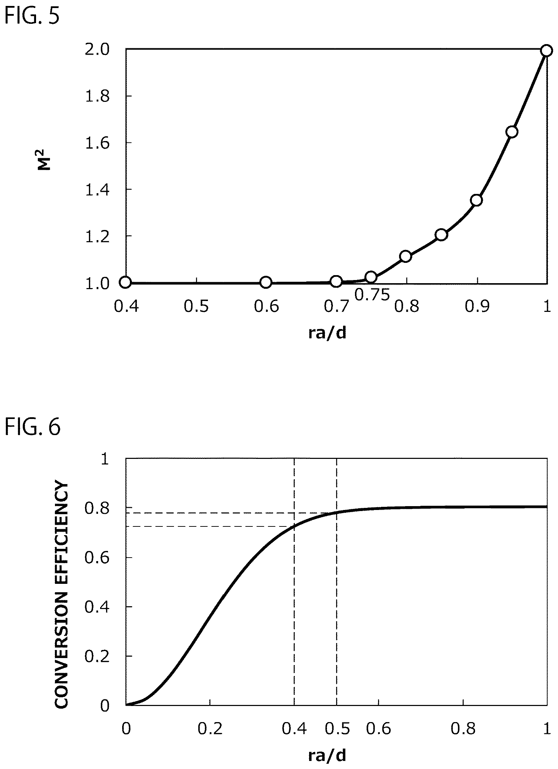

FIG. 5 is a diagram illustrating a relationship between the ratio of the radius d of the core 11 to the radius ra of the first region and beam quality (M²) of light emitted from the active element-added optical fiber 10. More specifically, FIG. 5 is a diagram in which the degree to which the mode of light propagating through the core 11 is amplified when the ratio ra/d of the radius d to the radius ra is changed is estimated by a numerical simulation and converted into beam quality (M²). As illustrated in FIG. 5, it can be seen that when the ratio ra/d of the radius d of the core 11 to the radius ra of the first region 11a to which the active element is added throughout exceeds 0.7, that is, in the case of ra > 0.7d, the beam quality starts to deteriorate slightly. In other words, when ra ≤ 0.7d, deterioration of beam quality can be suppressed. Further, when ra/d is smaller than 0.7, that is, when ra < 0.7d, M² converges to approximately 1, and it can be seen that deterioration of beam quality is further suppressed. On the other hand, it can be seen that when the ratio ra/d exceeds 0.75, amplification of higher modes increases, and the beam quality rapidly deteriorates. That is, as described above, when ra/d is 0.75 or less in the core 11 of the active element-added optical fiber 10, that is, when the radius ra of the first region 11a is 0 < ra ≤ 0.75d, amplification of higher modes is suppressed in the active element-added optical fiber 10, and deterioration of beam quality of emitted light is suppressed. As described above, when the radius ra of the first region 11a is 0 < ra ≤ 0.75d, amplification of higher modes is suppressed in the active element-added optical fiber 10, and deterioration of beam quality of emitted light is suppressed. Further, in the case of 0 < ra ≤ 0.7d, amplification of higher modes is further suppressed in the active element-added optical fiber 10, and deterioration of beam quality of emitted light is further suppressed.

Note that when the radius ra of the first region 11a is larger than 0.1d, the active element-added optical fiber can be easily manufactured using an existing manufacturing method such as an immersion method.

FIG. 6 is a diagram illustrating a relationship between the ratio of the radius d of the core 11 to the radius ra of the first region 11a and conversion efficiency at which pumping light incident on the active element-added optical fiber 10 is converted into light emitted from the active element-added optical fiber 10. The conversion efficiency is indicated by "power of light emitted from the active element-added optical fiber 10/power of pumping light incident on the active element-added optical fiber 10". As illustrated in FIG. 6, when the ratio (ra/d) of the radius d of the core 11 to the radius ra of the first region 11a is 0.4, the ratio is approximately 90% of the maximum conversion efficiency, and further when ra/d is larger than 0.4, that is, when 0.4d < ra, the ratio to the maximum value of the conversion efficiency is larger than 90%. Note that, as described above, in a case where ra/d is 0.75 or less, deterioration of beam quality of emitted light is suppressed. That is, when ra/d is 0.75 or less, it is possible to produce a laser with good beam quality while suppressing a reduction in conversion efficiency by setting ra/d to be larger than 0.4. Therefore, it is preferable that the ratio of the radius d of the core 11 and the radius ra of the first region 11a is larger than 0.4 with respect to the conversion efficiency. That is, 0.4d < ra is preferable from the viewpoint of increasing the efficiency of amplification of light. Furthermore, when the ratio of the radius d of the core 11 and the radius ra of the first region 11a is 0.5, the ratio is approximately 97% of the maximum conversion efficiency. Therefore, it is more preferable that the ratio of the radius d of the core 11 and the radius ra of the first region 11a is larger than 0.5 with respect to the conversion efficiency. That is, 0.5d < ra is preferable from the viewpoint of further increasing the efficiency of amplification of light. Further, when 0.5d < ra, the basic mode can be efficiently amplified while the amplification of higher modes is suppressed.

### <Configuration other than the active element-added optical fiber>

The first optical fiber 30 is a double-clad optical fiber in which the configuration of the core is different from the configuration of the core 11 of the active element-added optical fiber 10. The first optical fiber 30 is connected to one end of the active element-added optical fiber 10. Therefore, the core 11 of the active element-added optical fiber 10 and the core of the first optical fiber 30 are optically coupled, and the inner cladding 12 of the active element-added optical fiber 10 and the inner cladding of the first optical fiber 30 are optically coupled.

The core of the first optical fiber 30 is mainly different from the core 11 of the active element-added optical fiber 10 in that the active element is not added. The first optical fiber 30 is a few mode fiber, and propagates light that is similar to the light propagating through the core 11 of the active element-added optical fiber 10. Therefore, each LP mode light propagating through the core 11 of the active element-added optical fiber 10 can propagate through the core of the first optical fiber 30 as it is. Note that the definition of the core of the first optical fiber 30 is similar to the definition of the core 11 of the active element-added optical fiber 10.

As described above, the first FBG 35 is provided in the first optical fiber 30. In this way, the first FBG 35 is disposed on one side of the active element-added optical fiber 10 and optically coupled to the core 11 of the active element-added optical fiber 10. In the first FBG 35, a high refractive index portion having a refractive index higher than that of a portion other than the first FBG 35 in the core and a low refractive index portion having a refractive index similar to that of a portion other than the first FBG 35 in the core are periodically repeated along the longitudinal direction of the core. The repeating pattern of the high refractive index portion is formed, for example, by irradiating a site to be the high refractive index portion with ultraviolet rays. The first FBG 35 formed in this manner is configured as a first mirror that reflects light including a predetermined wavelength within light emitted when the active element added to the core 11 of the active element-added optical fiber 10 is in a pumped state. For example, when the active element added to the core 11 of the active element-added optical fiber 10 is ytterbium as in the present embodiment, the predetermined wavelength is, for example, 1030 nm to 1090 nm, and 1070 nm. Further, the reflectance of the first FBG 35 is higher than the reflectance of the second FBG 45 to be described later, and light including the predetermined wavelength is reflected, for example, at 99% or more.

The second optical fiber 40, which does not have the outer cladding, is different from the first optical fiber 30, and the other configuration of the second optical fiber 40 is similar to the configuration of the first optical fiber 30 other than the outer cladding. Therefore, the second optical fiber 40 has a configuration in which the cladding surrounds the core and the cladding is covered with the cover layer. The second optical fiber 40 is connected to the other end of the active element-added optical fiber 10. Therefore, the core 11 of the active element-added optical fiber 10 and the core of the second optical fiber 40 are optically coupled, and the inner cladding 12 of the active element-added optical fiber 10 and the cladding of the second optical fiber 40 are optically coupled. Therefore, the few mode light propagating through the core 11 of the active element-added optical fiber 10 propagates through the core of the second optical fiber 40 in the few mode. Note that, in the case of the configuration of the fiber laser device 1 illustrated in FIG. 1, the inner cladding 12 of the active element-added optical fiber 10 and the cladding of the second optical fiber 40 may not be optically coupled.

The second FBG 45 is provided in the core of the second optical fiber 40 as described above. In this way, the second FBG 45 is disposed on the other side of the active element-added optical fiber 10 and optically coupled to the core 11 of the active element-added optical fiber 10. Similar to the first FBG 35, the second FBG 45 is formed by a periodical repetition of a high refractive index portion and a low refractive index portion. The second FBG 45 is configured as a second mirror that reflects light including a predetermined wavelength reflected by the first FBG 35 at a lower reflectance than the first FBG 35. When light reflected by the first FBG 35 is incident, the second FBG 45 reflects the light at a reflectance of, for example, about 10%. In this way, a resonator is formed by the first FBG 35, the active element-added optical fiber 10, and the second FBG 45. Further, in the present embodiment, nothing is particularly connected to the other end of the second optical fiber 40 on the side opposite to the active element-added optical fiber 10, but a glass rod or the like having a diameter larger than that of the core of the second optical fiber 40 may be connected.

The pumping light source 20 includes a plurality of laser diodes 21. In the present embodiment, the laser diodes 21 are, for example, a Fabry-Perot type semiconductor laser made of a GaAs-based semiconductor, and emits pumping light having a center wavelength of 915 nm. Further, each laser diode 21 of the pumping light source 20 is connected to an optical fiber 25, and the pumping light emitted from the laser diode 21 propagates through the optical fiber 25 as, for example, multimode light.

Each optical fiber 25 is connected to one end of the first optical fiber 30 in the optical combiner 50. Specifically, the cores of the respective optical fibers 25 are connected to the inner cladding of the first optical fiber 30 so that the cores of the respective optical fibers 25 are optically coupled to the inner cladding of the first optical fiber 30. Therefore, the pumping light emitted from each laser diode 21 is incident on the inner cladding of the first optical fiber 30 via the optical fiber 25, and is incident on the inner cladding 12 of the active element-added optical fiber 10 from the inner cladding of the first optical fiber 30.

The third optical fiber 60 is an optical fiber having a core and a cladding. The core of the third optical fiber 60 is connected to the core of the first optical fiber 30 in the optical combiner 50. Therefore, the light propagating through the core of the first optical fiber 30 toward the optical combiner 50 is incident on the core of the third optical fiber 60. Further, on the side of the third optical fiber 60 opposite to the side connected to the first optical fiber 30, a terminal portion 65 that converts light into heat is provided.

Next, the operation of the fiber laser device 1 will be described.

First, pumping light is emitted from each laser diode 21 of the pumping light source 20. This pumping light is incident on the inner cladding 12 of the active element-added optical fiber 10 from the optical fiber 25 via the inner cladding of the first optical fiber 30, and mainly propagates through the inner cladding 12. The pumping light propagating through the inner cladding 12 pumps the active element added to the core 11 when passing through the core 11. The active element in the pumped state emits spontaneous emission light in a wavelength band including a predetermined wavelength. With this spontaneous emission light as a starting point, light including the predetermined wavelength commonly reflected by the first FBG 35 and the second FBG 45 resonates between the first FBG 35 and the second FBG 45. When the resonating light propagates through the core 11 of the active element-added optical fiber 10, the active element in the pumped state causes stimulated emission, and the resonating light is amplified. A part of the resonating light is transmitted through the second FBG 45 and emitted from the second optical fiber 40. Then, when the gain and the loss in the resonator including the first FBG 35, the active element-added optical fiber 10, and the second FBG 45 become equal, a laser oscillation state is formed, and light having a constant power is emitted from the second optical fiber 40.

Note that a major part of the light propagating from the active element-added optical fiber 10 side to the first optical fiber 30 and transmitted through the first FBG 35 is converted into heat at the terminal portion 65 and disappears.

Incidentally, as described above, each of the active element-added optical fiber 10, the first optical fiber 30, and the second optical fiber 40 is a few mode fiber that enables propagation of the LP11 mode light. Therefore, the LP11 mode light can be excited at the connection point between the first optical fiber 30 and the active element-added optical fiber 10, the connection point between the second optical fiber 40 and the active element-added optical fiber 10, and other positions. However, in the active element-added optical fiber 10, the LP01 mode light is amplified, and the amplification of light in a higher mode is suppressed. Therefore, the light emitted from the second optical fiber 40 can be light in which amplification of the LP11 mode light is suppressed. Therefore, with the fiber laser device 1 of the present embodiment, light in which deterioration of beam quality is suppressed can be emitted.

As described above, in the active element-added optical fiber 10 of the present embodiment, the radius ra of the first region 11a to which the active element is added throughout is O.ld < ra ≤ 0.75d, and the active element is not added to the second region 11b. Furthermore, the average value of the concentration of the active element in the region of 0 ≤ r ≤ 0.1d is higher than the average value of the concentration of the active element in the region of O.ld < r ≤ ra, and in the region of 0.2d < r ≤ 0.9d, at least one maximum value position at a refractive index higher than the average value of the refractive index in the region of 0 ≤ r ≤ 0.9d exists.

By adding the active element to the first region 11a having the above radius and not adding the active element to the second region 11b, while the light in the basic mode propagating through the core 11 is amplified, the amplification of light in a higher mode can be suppressed. Further, when the average value of the concentration of the active element in the region of 0 ≤ r ≤ 0.1d is higher than the average value of the concentration of the active element in the region of O.ld < r ≤ ra, the LP01 mode light propagating through the core can be further amplified. On the other hand, in the region of 0.2d < r ≤ 0.9d, when at least one maximum value position at a refractive index higher than the average value of the refractive index in the region of 0 ≤ r ≤ 0.9d exists, it is possible to suppress the LP01 mode light from being excessively concentrated in the vicinity of the central axis and to increase the effective cross-sectional area of the LP01 mode light. Therefore, occurrence of stimulated Raman scattering can be suppressed. Therefore, with the active element-added optical fiber of the present embodiment, deterioration of beam quality can be suppressed and light can be amplified.

Further, as described above, the refractive index profile in the vicinity of the other maximum value position is a refractive index profile in which the refractive index gradually decreases from the maximum value position toward at least an inner side of the core. In such a refractive index profile, for example, as compared with a refractive index profile in which the refractive index protrudes in a shape in which the maximum value position and the vicinity thereof are convex upward with respect to a rectangular refractive index profile, the maximum value position is likely to be away from the central axis because of an inclination of the refractive index. As described above, the maximum value position is away from the central axis, so that the LP01 mode light can be further suppressed from being excessively concentrated in the vicinity of the central axis of the core, and the effective cross-sectional area of the LP01 mode light can be further increased. Therefore, the occurrence of stimulated Raman scattering can be suppressed, deterioration of beam quality can be suppressed, and light can be amplified.

Therefore, with the resonator including the active element-added optical fiber, and the fiber laser device 1, light in which deterioration of beam quality is suppressed can be emitted.

Further, in the active element-added optical fiber 10 of the present embodiment, the average value of the refractive index in the region of 0 ≤ r ≤ 0.1d is higher than the refractive index in the region of r = 0.2d. Therefore, the efficiency of amplification of the LP01 mode light can be further increased. However, the refractive index in the region of r = 0.2d may be equal to or more than the average value of the refractive index in the region of 0 ≤ r ≤ 0.1d.

Further, in the active element-added optical fiber 10 of the present embodiment, at least one maximum value position exists in the region of 0.4d < r ≤ ra. Therefore, it is possible to efficiently amplify the LP01 mode light by suppressing the LP01 mode light from being excessively concentrated on the center of the core 11 and suppressing protrusion of the LP01 mode light from the first region 11a. Note that the maximum value position may not exist in such a range.

Further, in the active element-added optical fiber 10 of the present embodiment, the standard deviation of the relative refractive index difference of the region of 1.1ra < r ≤ 0.9d is 0.01 or less. In general, the refractive index on the outer peripheral side of the core is likely to influence the distribution of the power of the light propagating through the core. Therefore, with such a configuration, it is possible to suppress unintentional disturbance of the power of the light. Note that the standard deviation of the relative refractive index difference of the region of 1.1ra < r ≤ 0.9d may not be 0.01 or less.

Further, in the active element-added optical fiber 10 of the present embodiment, the region of 1.1ra < r ≤ d is made of quartz to which only germanium is added. Therefore, the standard deviation of the relative refractive index difference of the region of 1.1ra < r ≤ 0.9d can be easily 0.01 or less. However, as long as the active element is not added to the second region 11b, a dopant other than germanium may be added to the region of 1.1ra < r ≤ d.

Although the present invention has been described by taking the embodiment as an example, the present invention is not to be construed as being limited to the above embodiment, and the configuration can be appropriately changed within the scope as defined by the appended claims.

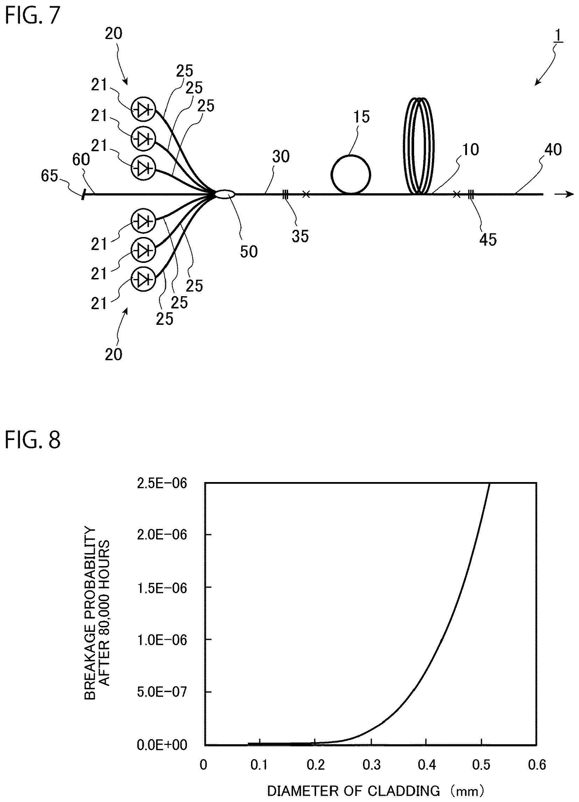

For example, the theoretical cutoff wavelength of the LP02 mode light of the active element-added optical fiber 10 of the embodiment described above is preferably shorter than 1760 nm. By setting the theoretical cutoff wavelength of the LP02 mode light in this manner, for example, in a case where the active element-added optical fiber 10 is bent at a diameter of 120 mm and light of 1070 nm is caused to propagate through the active element-added optical fiber 10, the cutoff wavelength in the LP02 mode can be shorter than 1070 nm at the site of the active element-added optical fiber 10 bent at a diameter of 120 mm, and the LP02 mode light can be leaked while the LP01 mode light is propagated. FIG. 7 is a diagram illustrating a variation of the fiber laser device 1. Specifically, it is a diagram illustrating a fiber laser device having a site of the active element-added optical fiber 10 bent at a diameter of 120 mm as described above. Note that, in the description of FIG. 7, the same configurations as those described in the above embodiment are denoted by the same reference numerals, and redundant description is omitted unless otherwise specified. The fiber laser device 1 of FIG. 7 is different from the fiber laser device of the above embodiment in that the theoretical cutoff wavelength of the LP02 mode light of the active element-added optical fiber 10 is shorter than 1760 nm, and the active element-added optical fiber 10 has a bent portion 15 bent at a diameter of 120 mm. Light having a wavelength of 1760 nm propagates through the bent portion 15, so that the LP02 mode light can be leaked. Therefore, when the active element-added optical fiber 10 has the bent portion 15, it is possible to suppress propagation of the light in a higher mode, which is an even mode, while propagating the LP01 mode light.

Incidentally, there is a concern that when the active element-added optical fiber 10 is bent at a diameter of 120 mm, the active element-added optical fiber 10 can be broken. Therefore, in this case, the diameter of the cladding made of quartz glass of the active element-added optical fiber 10 is preferably set to be within a predetermined size. The cladding made of quartz glass is the inner cladding 12 when the outer cladding 13 is made of resin, and is the inner cladding 12 and the outer cladding 13 when the outer cladding 13 is made of quartz glass. FIG. 8 is a diagram illustrating a relationship between a diameter of a cladding and a breakage probability. This breakage probability is the breakage probability of an optical fiber after 80,000 hours in a case where an optical fiber having a cladding made of quartz glass is wound one turn with a diameter of 120 mm and a load that increases the length of the optical fiber by 1% is applied. From FIG. 8, when the diameter of the cladding is 430 um or less, the breakage probability of the optical fiber after 80,000 hours can be suppressed to 10⁻⁶ or less. Therefore, when the outer cladding 13 is made of resin, the diameter of the inner cladding 12 is preferably 430 um or less, and when the outer cladding 13 is made of quartz glass, the diameter of the outer cladding 13 is preferably 430 um or less.

Further, in the above embodiment, the resonator-type fiber laser device has been described as an example of the fiber laser device, but the fiber laser device using the active element-added optical fiber 10 of the present invention may be, for example, of a master oscillator-power amplifier (MO-PA) type in which pumping light and seed light are incident on the active element-added optical fiber 10.

Further, in the above embodiment, the region in which the relative refractive index difference is 0.05% from the central axis C to the inner cladding 12 is the core 11, but the region to be the core may not be the region in which the relative refractive index difference is 0.05% as long as it is the region in which the relative refractive index difference from the central axis to the inner cladding of the optical fiber is larger than 0%.

Further, in the above embodiment, the example in which the average value of the concentration of the active element in the region of 0 ≤ r ≤ 0.1d is higher than the average value of the concentration of the active element in the region of O.ld < r ≤ ra has been described, but the average value of the concentration of the active element in the region of 0 ≤ r ≤ 0.1d may not be higher than the average value of the concentration of the active element in the region of O.ld < r ≤ ra. Even when the average value of the concentration of the active element in the region of 0 ≤ r ≤ 0.1d is not higher than the average value of the concentration of the active element in the region of O.ld < r ≤ ra, it is possible to obtain an active element-added optical fiber capable of suppressing deterioration of beam quality.

Further, the average value of the refractive index in the region of O.ld ≤ r ≤ 0.8ra may be higher than the average value of the refractive index in the region of 1.1ra ≤ r ≤ 0.9d. In this case, by increasing the maximum value of the refractive index in the range of 0.2d < r < 0.9d, the effective cross-sectional area of light propagating through the core can be further increased.

Further, the average value of the refractive index in the region of 0.1d ≤ r ≤ 0.8ra may be lower than the average value of the refractive index in the region of 1.1ra ≤ r ≤ 0.9d. In this case, the spread of the electric field distribution of the light propagating through the optical fiber can be suppressed, and the effective cross-sectional area of the light propagating through the core can be reduced. Therefore, a difference in propagation constant between the LP01 mode and the LP11 mode can be increased, and deterioration of beam quality can be suppressed.

Further, the average value of the refractive index in the region of 0.1d ≤ r ≤ 0.8ra may be equal to the average value of the refractive index in the region of 1.1ra ≤ r ≤ 0.9d. In this case, when the effect that the maximum value of the refractive index in the range of r < O.ld reduces the effective cross-sectional area is equivalent to the effect that the maximum value of the refractive index in the range of 0.2d < r < 0.9d increases the effective cross-sectional area, the optical fiber according to the present invention and the optical fiber having a rectangular refractive index profile can be connected while suppressing the optical loss.

Further, the maximum value position may be formed by an element other than the active element added to the core. This point will be described below.

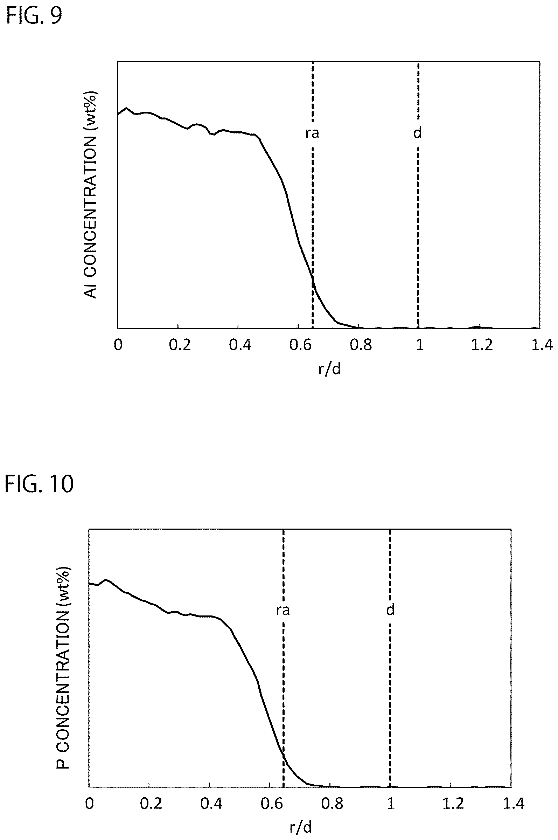

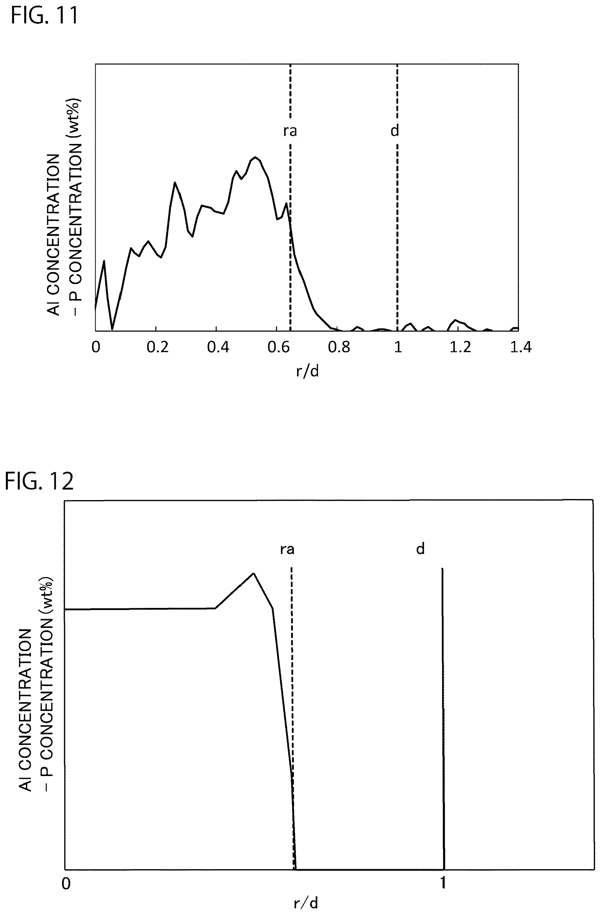

For example, aluminum and phosphorus may be added to at least a part of the first region of the core together with the active element. By adding aluminum or phosphorus to the core together with the active element, it is possible to suppress photodarkening. Further, in the case of co-adding aluminum and phosphorus, when the concentration of aluminum is higher than the concentration of phosphorus, aluminum acts as an up-dopant that increases the refractive index, and phosphorus acts as a down-dopant that reduces the refractive index. On the other hand, when the concentration of phosphorus is higher than the concentration of aluminum, phosphorus acts as an up-dopant, and aluminum acts as a down-dopant. Therefore, by co-adding aluminum and phosphorus at different concentrations, it is possible to suppress photodarkening while suppressing an excessive increase in the refractive index of the core. When the up-dopant and the down-dopant are further added to the first region as described above, for example, aluminum may be added in the concentration distribution illustrated in FIG. 9, and phosphorus may be added in the concentration distribution illustrated in FIG. 10. In this case, the distribution of the concentration difference between aluminum and phosphorus as illustrated in FIG. 11 is formed, and the maximum value position is formed in the vicinity of 0.5d where the concentration difference is maximum. Further, also by the distribution of the concentration difference between aluminum and phosphorus as illustrated in FIG. 12, the maximum value position is formed in the vicinity of 0.5d. Note that, by adjusting the concentration distribution of each of the up-dopant and the down-dopant added to the first region, the maximum value position can be formed at a position different from the vicinity of 0.5d in the first region.

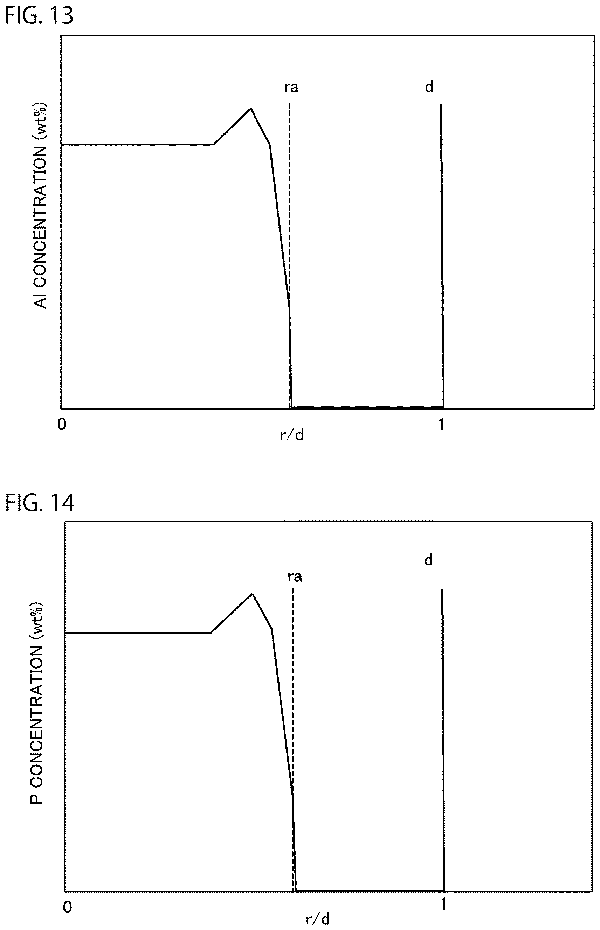

Further, an up-dopant may be added to the first region of the core together with the active element. For example, aluminum may be further added as an up-dopant to at least a part of the first region. For example, in the example illustrated in FIG. 13, aluminum is added so that the concentration of aluminum is maximized at the maximum value position in the vicinity of 0.5d illustrated in FIG. 11. When aluminum, which is an up-dopant, is added in such a concentration distribution, the refractive index is further increased in the vicinity of 0.5d, and it becomes easy to form the maximum value position in the vicinity of 0.5d. Further, in the example illustrated in FIG. 14, phosphorus is added so that the concentration of phosphorus is maximized at the maximum value position in the vicinity of 0.5d illustrated in FIG. 4. When phosphorus, which is an up-dopant, is added in such a concentration distribution, the refractive index is further increased in the vicinity of 0.5d, and it becomes easy to form the maximum value position in the vicinity of 0.5d. Note that, by adjusting the concentration distribution of the up-dopant added to the first region, the maximum value position can be formed at a position different from the vicinity of 0.5d in the first region.

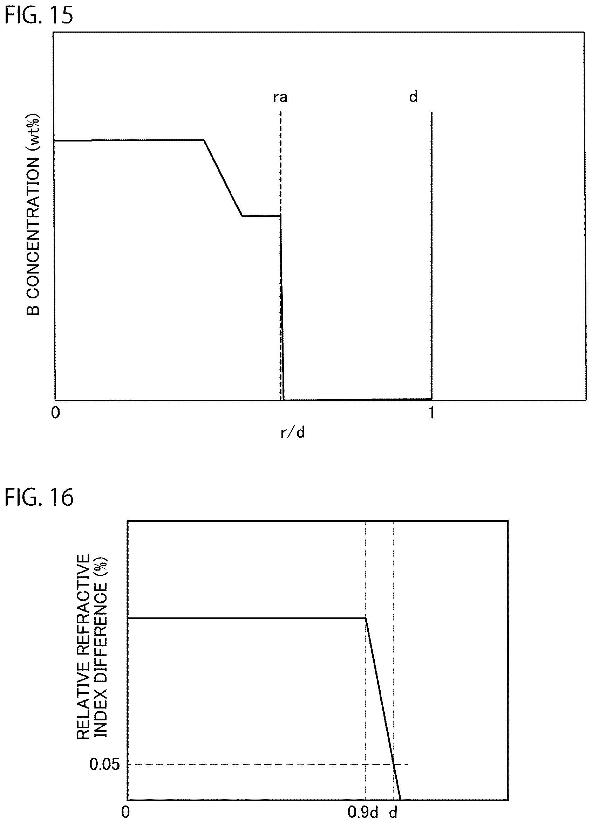

Further, a down-dopant may be added to at least a part of the first region of the core together with the active element. For example, boron may be further added to the first region as a down-dopant. For example, in the example illustrated in FIG. 15, boron is added so that the concentration of boron is minimized at the maximum value position in the vicinity of 0.5d illustrated in FIG. 11. When boron, which is a down-dopant, is added in such a concentration distribution, a reduction in refractive index in the vicinity of 0.5d is suppressed, and it becomes easy to form the maximum value position in the vicinity of 0.5d. Note that, by adjusting the concentration distribution of the down-dopant added to the first region, the maximum value position can be formed at a position different from the vicinity of 0.5d in the first region.

Note that the up-dopant is not limited to the above, but may be, for example, germanium. Further, the down-dopant is not limited to the above, but may be, for example, fluorine.

The present invention will be described below more specifically with reference to examples and comparative examples, but the present invention is not limited to the examples described below.

### (Examples 1 to 33)

The active element-added optical fiber illustrated in FIG. 2 was prepared as Examples 1 to 33. In these active element-added optical fibers, ytterbium was added throughout the first region 11a, and the active element was not added to the second region 11b. Further, aluminum, phosphorus, and boron were added to the first region to adjust the refractive index. The values below of the active element-added optical fibers of Examples 1 to 30 are shown in Table 1. A: the average value (wt%) of the concentration of ytterbium in the region of 0 ≤ r ≤ 0.1d; B: the average value (wt%) of the concentration of the active element in the region of O.ld < r ≤ ra; C: the average value (%) of the relative refractive index difference with respect to the inner cladding 12 in the region of 0 ≤ r ≤ 0.1d; D: the relative refractive index difference (%) with respect to the inner cladding 12 in the region of r = 0.2d; E: the relative refractive index difference (%) with respect to the cladding at the maximum value position in the region of 0.2d < r ≤ 0.9d; F: the maximum value position when d = 1; G: the radius ra of the first region 11a when d = 1; H: the average value (%) of the relative refractive index difference with respect to the inner cladding 12 in the region of 0 ≤ r ≤ 0.9d, and I: the standard deviation of the distribution of the relative refractive index difference with respect to the inner cladding 12 in the region of 1.1ra < r ≤ 0.9d. Note that the relative refractive index profile of the active element-added optical fiber of Example 4 is as illustrated in FIG. 4, and the concentration distribution of ytterbium added to the core of the active element-added optical fiber is as illustrated in FIG. 3. Further, the active element-added optical fibers were an optical fiber in which the theoretical cutoff wavelength in the LP02 mode was shorter than 1760 nm.

**Table 1**

| | A | B | C | D | E | F | G | H | I |
|---|---|---|---|---|---|---|---|---|---|
| Example 1 | 2.54 | 2.11 | 0.184 | 0.121 | 0.18 | 0.529 | 0.676 | 0.142 | 0.002 |
| Example 2 | 2.48 | 2.01 | 0.165 | 0.107 | 0.17 | 0.514 | 0.643 | 0.138 | 0.004 |
| Example 3 | 2.44 | 2.01 | 0.160 | 0.108 | 0.17 | 0.529 | 0.662 | 0.135 | 0.003 |
| Example 4 | 2.53 | 1.95 | 0.168 | 0.112 | 0.16 | 0.515 | 0.647 | 0.139 | 0.001 |
| Example 5 | 2.55 | 1.94 | 0.155 | 0.112 | 0.15 | 0.515 | 0.632 | 0.137 | 0.002 |
| Example 6 | 2.77 | 2.14 | 0.169 | 0.124 | 0.17 | 0.514 | 0.671 | 0.145 | 0.002 |
| Example 7 | 2.71 | 2.15 | 0.190 | 0.138 | 0.18 | 0.458 | 0.639 | 0.156 | 0.001 |
| Example 8 | 2.56 | 2.06 | 0.150 | 0.115 | 0.15 | 0.485 | 0.647 | 0.131 | 0.001 |
| Example 9 | 2.79 | 2.14 | 0.160 | 0.119 | 0.15 | 0.471 | 0.662 | 0.134 | 0.001 |
| Example 10 | 2.57 | 2.13 | 0.156 | 0.116 | 0.16 | 0.478 | 0.716 | 0.133 | 0.001 |
| Example 11 | 2.64 | 2.07 | 0.164 | 0.120 | 0.15 | 0.471 | 0.632 | 0.134 | 0.001 |
| Example 12 | 2.68 | 2.04 | 0.168 | 0.118 | 0.16 | 0.463 | 0.642 | 0.134 | 0.001 |
| Example 13 | 2.39 | 2.02 | 0.178 | 0.133 | 0.19 | 0.514 | 0.639 | 0.149 | 0.001 |
| Example 14 | 2.36 | 1.98 | 0.149 | 0.106 | 0.14 | 0.529 | 0.662 | 0.123 | 0.001 |
| Example 15 | 2.54 | 1.93 | 0.148 | 0.110 | 0.15 | 0.537 | 0.672 | 0.126 | 0.001 |
| Example 16 | 2.60 | 2.11 | 0.165 | 0.110 | 0.16 | 0.493 | 0.657 | 0.129 | 0.001 |
| Example 17 | 2.05 | 1.70 | 0.182 | 0.117 | 0.14 | 0.500 | 0.632 | 0.131 | 0.001 |
| Example 18 | 2.08 | 1.83 | 0.162 | 0.112 | 0.13 | 0.448 | 0.657 | 0.126 | 0.001 |
| Example 14 | 2.15 | 1.79 | 0.164 | 0.118 | 0.14 | 0.463 | 0.642 | 0.131 | 0.001 |
| Example 20 | 2.15 | 1.81 | 0.151 | 0.111 | 0.14 | 0.463 | 0.627 | 0,126 | 0.001 |
| Example 21 | 2.21 | 1.82 | 0.148 | 0.107 | 0.14 | 0.463 | 0.627 | 0.121 | 0.002 |
| Example 22 | 2.02 | 1.66 | 0.151 | 0.113 | 0.14 | 0.493 | 0.627 | 0.125 | 0.001 |
| Example 23 | 2.06 | 1.73 | 0.152 | 0.112 | 0.15 | 0.530 | 0.652 | 0.129 | 0.001 |
| Example 24 | 2.86 | 2.25 | 0.195 | 0.118 | 0.18 | 0.543 | 0.700 | 0.143 | 0.001 |
| Example 25 | 2.57 | 2.06 | 0.171 | 0.106 | 0.17 | 0.529 | 0.643 | 0.134 | 0.001 |
| Example 26 | 2.43 | 1.96 | 0.176 | 0.117 | 0.18 | 0.521 | 0.662 | 0.137 | 0.000 |
| Example 27 | 2.12 | 1.76 | 0.186 | 0.117 | 0.16 | 0.507 | 0.597 | 0.142 | 0.001 |
| Example 28 | 2.51 | 2.01 | 0.185 | 0.116 | 0.17 | 0.500 | 0.647 | 0.143 | 0.001 |
| Example 29 | 2.37 | 1.86 | 0.171 | 0.116 | 0.18 | 0.507 | 0.627 | 0.143 | 0.001 |
| Example 30 | 2.19 | 1.75 | 0.171 | 0.115 | 0.13 | 0.347 | 0.639 | 0.129 | 0.000 |
| Example 31 | 2.20 | 1.79 | 0.161 | 0.120 | 0.14 | 0.338 | 0.606 | 0.130 | 0.001 |
| Example 32 | 1.31 | 1.10 | 0.135 | 0.001 | 0.13 | 0.509 | 0.595 | 0.119 | 0.000 |
| Example 33 | 1.37 | 1.00 | 0.125 | 0.103 | 0.11 | 0.614 | 0.667 | 0.104 | 0.000 |

### (Comparative Examples 1 to 33)

FIG. 16 is a diagram illustrating an example of a refractive index profile of a core of an active element-added optical fiber of a Comparative Example. In each Comparative Example, it is assumed that the relative refractive index difference with respect to the cladding in the region of 0 ≤ r ≤ 0.9d is constant and the relative refractive index difference gradually decreases from r = 0.9d toward the outer peripheral side, and the relative refractive index difference with respect to the cladding is 0.05% in the region of r = d. This means that in the region of 0 ≤ r ≤ 0.9d, the active element is added at a constant concentration, and the concentration of the active element gradually decreases from r = 0.9d toward the outer peripheral side. The relative refractive index difference with respect to the cladding in the region of 0 ≤ r ≤ 0.9d in each Comparative Example was set to be the same as H: the average value of the relative refractive index difference with respect to the inner cladding 12 in the region of 0 ≤ r ≤ 0.9d in the corresponding Example. Therefore, for example, the relative refractive index difference with respect to the cladding in the region of 0 ≤ r ≤ 0.9d in Comparative Example 1 is 0.141(%), which is the same value as H in Example 1. The simulation below was performed under such conditions.

Next, the effective cross-sectional area (µm²) of the LP01 mode light in a case where light having a wavelength of 1070 nm propagates through the core of each of the active element-added optical fibers of Examples 1 to 33 and the active element-added optical fibers of Comparative Examples 1 to 33 was obtained by simulation. The results are shown in Table 2.

**Table 2**

| | Example | Comparative Example |
|---|---|---|
| 1 | 397.2 | 336.2 |
| 2 | 439.2 | 352.7 |
| 3 | 433.1 | 346.8 |
| 4 | 429.9 | 341.7 |
| 5 | 437.5 | 346.0 |
| 6 | 401.5 | 354.2 |
| 7 | 389.5 | 347.5 |
| 8 | 434.9 | 344.2 |
| 9 | 401.6 | 341.2 |
| 10 | 393.6 | 337.8 |
| 11 | 405.9 | 341.9 |
| 12 | 403.9 | 337.8 |
| 13 | 383.0 | 362.3 |
| 14 | 391.4 | 351.8 |
| 15 | 438.8 | 345.0 |
| 16 | 425.2 | 344.2 |
| 17 | 404.5 | 348.3 |
| 18 | 405.0 | 345.0 |
| 19 | 413.0 | 344.2 |
| 20 | 409.8 | 341.8 |
| 21 | 434.0 | 344.4 |
| 22 | 427.2 | 346.8 |
| 23 | 403.2 | 335.2 |
| 24 | 392.8 | 355.5 |
| 25 | 404.9 | 357.7 |
| 26 | 397.2 | 362.5 |
| 27 | 384.5 | 332.9 |
| 28 | 402.3 | 336.9 |
| 29 | 401.7 | 330.2 |
| 30 | 412.7 | 389.4 |
| 31 | 401.6 | 379.8 |
| 32 | 894.6 | 890.8 |
| 33 | 1023.4 | 892.2 |

As shown in Table 2, the effective cross-sectional area of the LP01 mode light in the active element-added optical fibers of Examples 1 to 33 was larger than the effective cross-sectional area of the LP01 mode light in the corresponding active element-added optical fibers of Comparative Examples 1 to 33. This is considered to be because in the active element-added optical fibers of Examples 1 to 33, in the region of 0.2d < r ≤ 0.9d, at least one maximum value position at a relative refractive index difference higher than the average value of the relative refractive index difference in the region of 0 ≤ r ≤ 0.9d exists.

Further, in a case where light having a wavelength of 1070 nm propagates through the core of each of the active element-added optical fibers of Examples 1 to 33 and the active element-added optical fibers of Comparative Examples 1 to 33, the beam quality (M²) of light emitted from the active element-added optical fibers was obtained by simulation. The results are shown in Table 3.

**Table 3**

| | Example | Comparative Example |
|---|---|---|
| 1 | 1.32 | 1.89 |
| 2 | 1.28 | 1.76 |
| 3 | 1.3 | 1.84 |
| 4 | 1.33 | 1.88 |
| 5 | 1.27 | 1.9 |
| 6 | 1.28 | 1.92 |
| 7 | 1.28 | 1.75 |
| 8 | 1.32 | 1.83 |
| 9 | 1.31 | 1.87 |
| 10 | 1.32 | 1.9 |
| 11 | 1.26 | 1.93 |
| 12 | 1.29 | 1.78 |
| 13 | 1.3 | 1.81 |
| 14 | 1.25 | 1.85 |
| 15 | 1.28 | 1.77 |
| 16 | 1.26 | 1.91 |
| 17 | 1.29 | 1.84 |
| 18 | 1.34 | 1.89 |
| 19 | 1.33 | 1.94 |
| 20 | 1.34 | 1.79 |
| 21 | 1.32 | 1.81 |
| 22 | 1.35 | 1.8 |
| 23 | 1.33 | 1.85 |
| 24 | 1.32 | 1.77 |
| 25 | 1.35 | 1.91 |
| 26 | 1.29 | 1.83 |
| 27 | 1.3 | 1.89 |
| 28 | 1.27 | 1.79 |
| 29 | 1.26 | 1.88 |
| 30 | 1.30 | 1.88 |
| 31 | 1.28 | 1.88 |
| 32 | 1.28 | 2.03 |
| 33 | 1.34 | 2.09 |

As shown in Table 3, the values of the beam quality of the light emitted from the active element-added optical fibers of Examples 1 to 33 were smaller than the values of the beam quality of the light emitted from the corresponding active element-added optical fibers of Comparative Examples 1 to 33. That is, with the active element-added optical fibers of Examples 1 to 30, deterioration of beam quality was suppressed as compared with the corresponding active element-added optical fibers of Comparative Examples 1 to 30.

Note that, in Examples 1 to 33 shown in Tables 1 to 3 in which the active element was ytterbium, the average value of the concentration of ytterbium in the region of 0 ≤ r ≤ 0.1d was 1.31wt% or more and 2.86wt% or less. Further, the average value of the concentration of ytterbium in the region of O.ld < r ≤ ra was 1.00wt% or more and 2.25wt% or less. Further, the average value of the relative refractive index difference of the core to the cladding in the region of 0 ≤ r ≤ 0.1d was 0.125% or more and 0.195% or less. Further, the relative refractive index difference of the core to the cladding in the region of r = 0.2d was 0.091% or more and 0.138% or less. Further, the relative refractive index difference with respect to the cladding at the maximum value position in the region of 0.2d < r ≤ 0.9d was 0.11% or more and 0.19% or less. Further, the average value of the relative refractive index difference to the cladding in the region of 0 ≤ r ≤ 0.9d was 0.104% or more and 0.156% or less. Further, the standard deviation of the relative refractive index difference of the region of 1.1ra < r ≤ 0.9d was 0.004 or less.

Next, the relationship between the effective cross-sectional area of light propagating through the core of the active element-added optical fiber in which the maximum value position where the refractive index is maximum exists in the core as described above and the effective cross-sectional area of light propagating through the core of the active element-added optical fiber having a step-type refractive index profile as illustrated in FIG. 16 in which the relative refractive index difference of the core with respect to the cladding is constant was examined by simulation.

Specifically, a plurality of sets of step-type active element-added optical fibers and active element-added optical fibers having a maximum value, in which the relative refractive index difference of one active element-added optical fiber of the step-type active element-added optical fibers is the same as the average value of the relative refractive index difference of one active element-added optical fiber of a plurality of active element-added optical fibers having a maximum value, was subjected to the above simulation. That is, an optical fiber set having a common average value was subjected to the simulation. Note that the common average value in each of the plurality of optical fiber sets is different for each optical fiber set.

In the above simulation, the effective cross-sectional area of each of the step-type active element-added optical fiber and the active element-added optical fiber having the maximum value, which constitute the set described above, was calculated, and the difference between these effective cross-sectional areas was determined. Specifically, Simulation 1 of obtaining a difference in effective cross-sectional area using the active element-added optical fiber having a maximum value formed so that the average value in the region where the distance r from the central axis of the core is 0.055d or more and 0.1d or less is equal to or more than the value of the relative refractive index difference at the maximum value position, and Simulation 2 of obtaining a difference in effective cross-sectional area using the active element-added optical fiber having a maximum value formed so that the average value in the region where the distance r is 0 or more and 0.1d or less is equal to or less than the value of the relative refractive index difference at the maximum value position were performed.

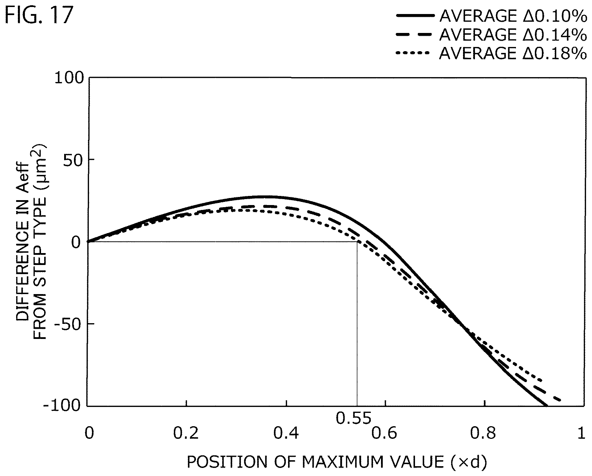

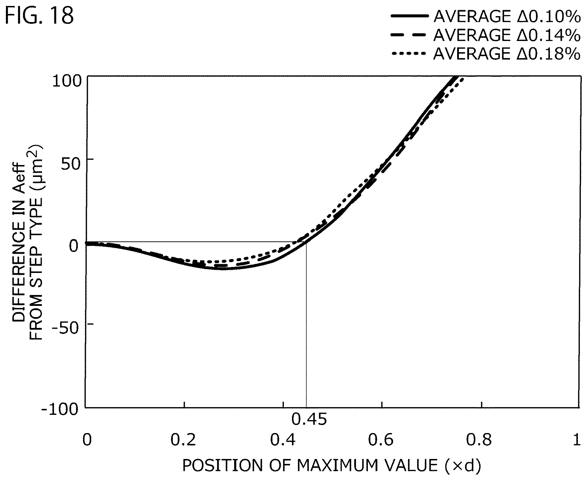

The results of Simulation 1 and Simulation 2 are illustrated in FIGS. 17 and 18, respectively. Note that FIGS. 17 and 18 illustrate the relationship between the maximum value position and the difference in effective cross-sectional area when an average value Δ of the relative refractive index difference of the core of the active element-added optical fiber having the maximum value is 0.10%, 0.14%, and 0.18%. Note that, as described above, the average value Δ of the relative refractive index difference of the core of the active element-added optical fiber having the maximum value is equal to the relative refractive index difference of the core of the step-type optical fiber constituting the optical fiber set together with the active element-added optical fiber having the maximum value.

As illustrated in FIG. 17, according to Simulation 1 using the active element-added optical fiber having the maximum value in which the average value of the relative refractive index difference in the region of 0.055d or more and 0.1d or less is the maximum value or more, it has been found that when the average value of the relative refractive index difference of the core is larger than 0% and 0.18% or less, when the maximum value position is 0.55d or less, the effective cross-sectional area is larger than that in the case of the step-type optical fiber having the same relative refractive index difference, which constitutes the optical fiber set. That is, with such an active element-added optical fiber having a maximum value, the effective cross-sectional area is increased, and stimulated Raman scattering can be further suppressed. Note that the case where the average value of the relative refractive index difference of the core is larger than 0% and 0.18% or less is a case where the refractive index of the core is a refractive index that is high enough to guide light, and, for example, the average value of the relative refractive index difference of the core may be 0.05% or more and 0.18% or less.

Further, as illustrated in FIG. 18, according to Simulation 2 using the active element-added optical fiber having the maximum value in which the average value of the relative refractive index difference in the region of 0 or more and 0.1d or less is the maximum value or less, it has been found that when the average value of the relative refractive index difference of the core is 0.10% or more, when the maximum value position is 0.45d or more, the effective cross-sectional area is larger than that in the case of the step-type optical fiber having the same relative refractive index difference, which constitutes the optical fiber set. That is, with such an active element-added optical fiber having a maximum value, the effective cross-sectional area is increased, and stimulated Raman scattering can be further suppressed. Note that, in Simulation 2, the upper limit of the average value of the relative refractive index difference that provides the effect of increasing the effective cross-sectional area is not particularly limited as long as the maximum value position is 0.45d or more, but, for example, the upper limit of the average value of the relative refractive index difference may be set to 0.18%.

As described above, according to the present invention, an active element-added optical fiber, a resonator, and a fiber laser device capable of suppressing deterioration of beam quality are provided, and are expected to be used in a laser device for machining or the like.

## Claims

1. An active element-added optical fiber (10) comprising a core (11), wherein
the core (11) includes a first region (11a) and a second region (11b),
the first region (11a) is a region from a central axis (C) to a radius ra, and an active element configured to be pumped by pumping light is added to the first region (11a),
the second region (11b) is a region that surrounds the first region (11a) with no gap and extends to an outer peripheral surface of the core (11), and the active element is not added to the second region (11b),
when a radius of the core is d, 0.1d < ra < d,
when a distance from a central axis (C) in a radial direction of the core is r, in a region of 0.2d < r ≤ 0.9d, at least one maximum value position where a refractive index is maximum at a refractive index higher than an average value of a refractive index in a region of 0 ≤ r ≤ 0.9d exists, **characterized in that**
an average value of a refractive index in a region of 0.1d ≤ r ≤ 0.8ra is higher than an average value of a refractive index in a region of 1.1ra ≤ r ≤ 0.9d.

2. The active element-added optical fiber (10) according to claim 1, wherein
an average value of a concentration of the active element in a region of 0 ≤ r ≤ 0.1d is higher than an average value of a concentration of the active element in a region of 0.1d < r ≤ ra.

3. The active element-added optical fiber (10) according to any one of claims 1 to 2, wherein
an average value of a refractive index in a region of 0 ≤ r ≤ 0.1d is higher than a refractive index in a region of r = 0.2d.

4. The active element-added optical fiber (10) according to claim 1, wherein
at least one maximum value position exists in a region of 0.338d ≤ r ≤ 0.614d.

5. The active element-added optical fiber (10) according to claim 4, wherein
0.595d ≤ ra ≤ 0.716d.

6. The active element-added optical fiber (10) according to any one of claims 1 to 5, wherein
a standard deviation of a relative refractive index difference of a region of 1.1ra < r ≤ 0.9d is 0.004 or less.

7. The active element-added optical fiber (10) according to claim 6, wherein
at least the region of 1.1ra < r ≤ 0.9d is made of quartz to which only germanium is added.

8. The active element-added optical fiber (10) according to any one of claims 1 to 7, wherein
the maximum value position is located in the first region (11a),
an up-dopant that increases a refractive index of the core (11) is further added to at least a part of the first region (11a), and
a concentration of the up-dopant is maximum at the maximum value position.

9. The active element-added optical fiber (10) according to any one of claims 1 to 7, wherein
the maximum value position is located in the first region (11a),
a down-dopant that reduces a refractive index of the core (11) is further added to at least a part of the first region (11a), and
a concentration of the down-dopant is minimum at the maximum value position.

10. The active element-added optical fiber (10) according to any one of claims 1 to 7, wherein
the maximum value position is located in the first region (11a),
an up-dopant that increases a refractive index of the core (11) and a down-dopant that reduces the refractive index of the core (11) are further added to at least a part of the first region (11a), and
a concentration difference between the up-dopant and the down-dopant is maximum at the maximum value position.

11. The active element-added optical fiber (10) according to any one of claims 1 to 10, further comprising:
a cladding (12) configured to surround an outer peripheral surface of the core (11) with no gap, wherein
an average value of a relative refractive index difference with respect to the cladding (12) in a region of 0 ≤ r ≤ 0.1d in the core (11) is equal to or less than a value of a relative refractive index difference at the maximum value position,
an average value of a relative refractive index difference of the core (11) with respect to the cladding (12) is 0.10% or more, and
the maximum value position is 0.45d or more.

12. The active element-added optical fiber (10) according to any one of claims 1 to 10, further comprising:
a cladding (12) configured to surround an outer peripheral surface of the core (11) with no gap, wherein
an average value of a relative refractive index difference with respect to the cladding (12) in a region of 0.055d ≤ r ≤ 0.1d in the core (11) is equal to or more than a value of a relative refractive index difference at the maximum value position,
an average value of a relative refractive index difference of the core (11) with respect to the cladding (12) is larger than 0% and 0.18% or less, and
the maximum value position is 0.55d or less.

13. The active element-added optical fiber (10) according to any one of claims 1 to 12, wherein
the core (11) has a refractive index profile in which a refractive index gradually decreases from the maximum value position toward at least an inner side of the core (11).

14. A resonator comprising:
the active element-added optical fiber (10) according to any one of claims 1 to 13;
a first mirror configured to be optically coupled to the core (11) of the active element-added optical fiber (10) on one side of the active element-added optical fiber (10) and reflect light having at least a part of wavelength of light emitted by the pumped active element; and
a second mirror configured to be optically coupled to the core (11) of the active element-added optical fiber (10) on an other side of the active element-added optical fiber (10) and reflect light having at least a part of wavelength of the light reflected by the first mirror at a reflectance lower than a reflectance of the first mirror.

15. A fiber laser device (1) comprising:
the active element-added optical fiber (10) according to any one of claims 1 to 13; and
a light source (20) configured to emit light that pumps the active element.

## Patentansprüche

1. Optische Faser (10) mit zugefügtem aktiven Element, welche einen Kern (11) aufweist, wobei
der Kern (11) eine erste Region (11a) und eine zweite Region (11b) enthält,
die erste Region (11a) eine Region von einer Mittelachse (C) zu einem Radius ra ist, und ein aktives Element, das zum Pumpen durch Pumplicht konfiguriert ist, der ersten Region (11a) hinzugefügt ist,
die zweite Region (11b) eine Region ist, welche die erste Region (11a) lückenlos umgibt und sich zu einer Außenumfangsfläche des Kerns (11) erstreckt, und das aktive Element zu der zweiten Region (11b) nicht hinzugefügt ist,
wenn ein Radius des Kerns d ist, 0,1d < ra <d,
wenn ein Abstand von einer Mittelachse (C) in radialer Richtung des Kerns r ist, in einer Region von 0,2d < r ≤ 0,9d zumindest eine Maximalwertposition, wo ein Brechungsindex maximal ist, an einem Brechungsindex, der höher ist als ein Durchschnittswert eines Brechungsindex in einer Region von 0 ≤ r ≤ 0,9d, existiert, **dadurch gekennzeichnet, dass**
ein Durchschnittswert eines Brechungsindex in einer Region von 0,1d ≤ r ≤ 0,8ra höher ist als ein Durchschnittswert eines Brechungsindex in einer Region von 1,1ra ≤ r ≤ 0,9d.

2. Die optische Faser (10) mit zugefügtem aktiven Element nach Anspruch 1, wobei
ein Durchschnittswert einer Konzentration des aktiven Elements in einer Region von 0 ≤ r ≤ 0,1d höher ist als ein Durchschnittswert einer Konzentration des aktiven Elements in einer Region von 0,1d < r ≤ ra.

3. Die optische Faser (10) mit zugefügtem aktiven Element nach einem der Ansprüche 1 bis 2, wobei
der Durchschnittswert eines Brechungsindex in einer Region von 0 ≤ r ≤ 0,1d höher ist als ein Brechungsindex in einer Region von r = 0,2d.

4. Die optische Faser (10) mit zugefügtem aktiven Element nach Anspruch 1, wobei
zumindest eine Maximalwertposition in einer Region von 0,338d ≤ r ≤ 0,614d existiert.

5. Die optische Faser (10) mit zugefügtem aktiven Element nach Anspruch 4, wobei
0,595d ≤ ra ≤ 0,716d.

6. Die optische Faser (10) mit zugefügtem aktiven Element nach einem der Ansprüche 1 bis 5, wobei
eine Standardabweichung einer relativen Brechungsindexdifferenz in einer Region von 1,1ra < r ≤ 0,9d 0,004 oder weniger beträgt.

7. Die optische Faser (10) mit zugefügtem aktiven Element nach Anspruch 6, wobei
zumindest die Region von 1,1ra < r ≤ 0,9d aus Quarz hergestellt ist, dem nur Germanium hinzugefügt ist.

8. Die optische Faser (10) mit zugefügtem aktiven Element nach einem der Ansprüche 1 bis 7, wobei
die Maximalwertposition in der ersten Region (11a) angeordnet ist,
ferner ein Hochdotierungsmittel, das einen Brechungsindex des Kerns (11) erhöht, zumindest einem Teil der ersten Region (11a) hinzugefügt ist, und
eine Konzentration des Hochdotierungsmittels an der Maximalwertposition maximal ist.

9. Die optische Faser (10) mit zugefügtem aktiven Element nach einem der Ansprüche 1 bis 7, wobei
die Maximalwertposition in der ersten Region (11a) angeordnet ist,
ferner ein Herabdotierungsmittel, das ein Brechungsindex des Kerns (11) reduziert, zumindest einem Teil der ersten Region (11a) hinzugefügt ist, und
eine Konzentration des Herabdotierungsmittels an der Maximalwertposition minimal ist.

10. Die optische Faser (10) mit zugefügtem aktiven Element nach einem der Ansprüche 1 bis 7, wobei
die Maximalwertposition in der ersten Region (11a) angeordnet ist,
ferner ein Hochdotierungsmittel, das einen Brechungsindex des Kerns (11) erhöht, und ein Herabdotierungsmittel, das den Brechungsindex des Kerns (11) reduziert, zumindest einem Teil der ersten Region (11a) hinzugefügt sind, und
eine Konzentrationsdifferenz zwischen dem Hochdotierungsmittel und dem Herabdotierungsmittel an der Maximalwertposition maximal ist.

11. Die optische Faser (10) mit zugefügtem aktiven Element nach einem der Ansprüche 1 bis 10, die ferner aufweist:
eine Hülle (12), die so konfiguriert ist, dass sie eine Außenumfangsfläche des Kerns (11) lückenlos umgibt, wobei
ein Durchschnittswert einer relativen Brechungsindexdifferenz in Bezug auf die Hülle (12) in einer Region von 0 ≤ r ≤ 0,1d in dem Kern (11) gleich oder kleiner als ein Wert einer relativen Brechungsindexdifferenz an der Maximalwertposition ist,
ein Durchschnittswert einer relativen Brechungsindexdifferenz des Kerns (11) in Bezug auf die Hülle (12) 0,10 % oder mehr beträgt, und
die Maximalwertposition 0,45d oder mehr beträgt.

12. Die optische Faser (10) mit zugefügtem aktiven Element nach einem der Ansprüche 1 bis 10, die ferner aufweist:
eine Hülle (12), die so konfiguriert ist, dass sie eine Außenumfangsfläche des Kerns (11) lückenlos umgibt, wobei ein Durchschnittswert einer relativen Brechungsindexdifferenz in Bezug auf die Hülle (12) in einer Region von 0,055d ≤ r ≤ 0,1d in dem Kern (11) gleich oder größer als ein Wert einer relativen Brechungsindexdifferenz an der Maximalwertposition ist,
ein Durchschnittswert einer relativen Brechungsindexdifferenz des Kerns (11) in Bezug auf die Hülle (12) größer als 0 % und 0,18 % oder weniger ist, und
die Maximalwertposition 0,55d oder weniger ist.

13. Die optische Faser (10) mit zugefügtem aktiven Element nach einem der Ansprüche 1 bis 12, wobei
der Kern (11) ein Brechungsindexprofil hat, in dem ein Brechungsindex von der Maximalwertposition zu zumindest einer Innenseite des Kerns (11) hin allmählich abnimmt.

14. Resonator, welcher aufweist:
die optische Faser (10) mit zugefügtem aktiven Element nach einem der Ansprüche 1 bis 13;
einen ersten Spiegel, der so konfiguriert ist, dass er an den Kern (11) der optischen Faser (10) mit zugefügtem aktiven Element an einer Seite der optischen Faser (10) mit zugefügtem aktiven Element optisch gekoppelt ist und Licht reflektiert, das zumindest ein Teil einer Wellenlänge von Licht hat, das durch das gepumpte aktive Element emittiert wird; und
einen zweiten Spiegel, der so konfiguriert ist, dass er an den Kern (11) der optischen Faser mit zugefügtem aktiven Element (10) an einer anderen Seite der optischen Faser (10) mit zugefügtem aktiven Element optisch gekoppelt ist und Licht reflektiert, das zumindest ein Teil einer Wellenlänge des Lichts hat, das von dem ersten Spiegel reflektiert wird, mit einem Reflexionsvermögen, das niedriger ist als ein Reflexionsvermögen des ersten Spiegels ist.

15. Faserlaservorrichtung (1), welche aufweist:
die optische Faser (10) mit zugefügtem aktiven Element nach einem der Ansprüche 1 bis 13; und
eine Lichtquelle (20), die konfiguriert ist, um Licht zu emittieren, das das aktive Element pumpt.

## Revendications

1. Fibre optique à élément actif ajouté (10) comprenant un coeur (11), dans laquelle le coeur (11) comprend une première région (11a) et une seconde région (11b),
la première région (11a) est une région à partir d'un axe central (C) jusqu'à un rayon ra, et un élément actif configuré pour être pompé par une lumière de pompage est ajouté à la première région (11a),
la seconde région (11b) est une région qui entoure la première région (11a) sans aucun interstice et s'étend jusqu'à une surface périphérique extérieure du coeur (11), et l'élément actif n'est pas ajouté à la seconde région (11b),
lorsqu'un rayon du coeur est d, 0,1d < ra < d,
lorsqu'une distance à partir d'un axe central (C) dans une direction radiale du coeur est r, dans une région où 0,2d < r ≤ 0,9d, au moins une position de valeur maximale où un indice de réfraction est maximal à un indice de réfraction plus élevé qu'une valeur moyenne d'un indice de réfraction dans une région où 0 ≤ r ≤ 0,9d existe,
**caractérisée en ce que**
une valeur moyenne d'un indice de réfraction dans une région où 0,1d ≤ r ≤ 0,8ra est plus élevée qu'une valeur moyenne d'un indice de réfraction dans une région où 1,1ra < r ≤ 0,9d.

2. Fibre optique à élément actif ajouté (10) selon la revendication 1, dans laquelle
une valeur moyenne d'une concentration de l'élément actif dans une région où 0 ≤ r ≤ 0,1d est plus élevée qu'une valeur moyenne d'une concentration de l'élément actif dans une région où 0, 1d < r ≤ ra.

3. Fibre optique à élément actif ajouté (10) selon l'une quelconque des revendications 1 à 2, dans laquelle
une valeur moyenne d'un indice de réfraction dans une région où 0 ≤ r ≤ 0,1d est plus élevée qu'un indice de réfraction dans une région où r = 0,2d.

4. Fibre optique à élément actif ajouté (10) selon la revendication 1, dans laquelle
au moins une position de valeur maximale existe dans une région où 0,338d < r ≤ 0,614d.

5. Fibre optique à élément actif ajouté (10) selon la revendication 4, dans laquelle 0,595d ≤ ra ≤ 0,716d.

6. Fibre optique à élément actif ajouté (10) selon l'une quelconque des revendications 1 à 5, dans laquelle
un écart type d'une différence d'indice de réfraction relative d'une région où 1,1ra < r ≤ 0,9d est de 0,004 ou moins.

7. Fibre optique à élément actif ajouté (10) selon la revendication 6, dans laquelle
au moins la région où 1, 1ra < r ≤ 0,9d est faite de quartz auquel seulement du germanium est ajouté.

8. Fibre optique à élément actif ajouté (10) selon l'une quelconque des revendications 1 à 7, dans laquelle
la position de valeur maximale est située dans la première région (11a),
un dopant accroissant qui augmente un indice de réfraction du coeur (11) est en outre ajouté à au moins une partie de la première région (11a), et
une concentration du dopant accroissant est maximale à la position de valeur maximale.

9. Fibre optique à élément actif ajouté (10) selon l'une quelconque des revendications 1 à 7, dans laquelle
la position de valeur maximale est située dans la première région (11a),
un dopant abaissant qui réduit un indice de réfraction du coeur (11) est en outre ajouté à au moins une partie de la première région (11a), et
une concentration du dopant abaissant est minimale à la position de valeur maximale.

10. Fibre optique à élément actif ajouté (10) selon l'une quelconque des revendications 1 à 7, dans laquelle
la position de valeur maximale est située dans la première région (11a),
un dopant accroissant qui augmente un indice de réfraction du coeur (11) et un dopant abaissant qui réduit l'indice de réfraction du coeur (11) sont en outre ajoutés à au moins une partie de la première région (11a), et
une différence de concentration entre le dopant accroissant et le dopant abaissant est maximale à la position de valeur maximale.

11. Fibre optique à élément actif ajouté (10) selon l'une quelconque des revendications 1 à 10, comprenant en outre :
une gaine (12) configurée pour entourer une surface périphérique extérieure du coeur (11) sans aucun interstice, dans laquelle
une valeur moyenne d'une différence d'indice de réfraction relative par rapport à la gaine (12) dans une région où 0 ≤ r ≤ 0,1d dans le coeur (11) est égale ou inférieure à une valeur d'une différence d'indice de réfraction relative à la position de valeur maximale,
une valeur moyenne d'une différence d'indice de réfraction relative du coeur (11) par rapport à la gaine (12) est de 0,10 % ou plus, et
la position de valeur maximale est 0,45d ou plus.

12. Fibre optique à élément actif ajouté (10) selon l'une quelconque des revendications 1 à 10, comprenant en outre :
une gaine (12) configurée pour entourer une surface périphérique extérieure du coeur (11) sans aucun interstice, dans laquelle
une valeur moyenne d'une différence d'indice de réfraction relative par rapport à la gaine (12) dans une région où 0,055d ≤ r ≤ 0,1d dans le coeur (11) est égale ou supérieure à une valeur d'une différence d'indice de réfraction relative à la position de valeur maximale,
une valeur moyenne d'une différence d'indice de réfraction relative du coeur (11) par rapport à la gaine (12) est plus grande que 0 % et de 0,18 % ou moins, et
la position de valeur maximale est 0,55d ou moins.

13. Fibre optique à élément actif ajouté (10) selon l'une quelconque des revendications 1 à 12, dans laquelle
le coeur (11) a un profil d'indice de réfraction dans lequel un indice de réfraction diminue progressivement à partir de la position de valeur maximale vers au moins un côté intérieur du coeur (11).

14. Résonateur comprenant :
la fibre optique à élément actif ajouté (10) selon l'une quelconque des revendications 1 à 13 ;
un premier miroir configuré pour être couplé optiquement au coeur (11) de la fibre optique à élément actif ajouté (10) sur un côté de la fibre optique à élément actif ajouté (10) et réfléchir une lumière ayant au moins une partie d'une longueur d'onde d'une lumière émise par l'élément actif pompé ; et
un second miroir configuré pour être couplé optiquement au coeur (11) de la fibre optique à élément actif ajouté (10) sur un autre côté de la fibre optique à élément actif ajouté (10) et réfléchir une lumière ayant au moins une partie d'une longueur d'onde de la lumière réfléchie par le premier miroir à une réflectance plus faible qu'une réflectance du premier miroir.

15. Dispositif laser à fibre (1) comprenant :
la fibre optique à élément actif ajouté (10) selon l'une quelconque des revendications 1 à 13 ; et
une source de lumière (20) configurée pour émettre une lumière qui pompe l'élément actif.
